# EUROPEAN PATENT APPLICATION

(11) **EP 4 325 645 A1**
(43) Date of publication of application: **21.02.2024**
(21) Application number: 22191236.3
(22) Date of filing: 19.08.2022
(51) Int. Cl.: H01M 50/325, H01M 50/204, H01M 50/308, H01M 50/30, F16K 17/164, F16K 15/14

(54) **DEGASSING UNIT WITH SEGMENTED MEMBRANE**

(71) Applicant: MANN+HUMMEL GmbH, 71636 Ludwigsburg (DE)
(72) Inventor: DVORÁK, Milan, 59401 Dolní He manice (CZ)
(74) Representative: Mann + Hummel Intellectual Property

(57) **Abstract**

The invention refers to a degassing unit (30) for an electronics case, in particular for a battery case, comprising a base body (32), which is attachable to the case so as to seal against a perimeter of an aperture in the case, the base body (32) comprising a degassing opening (38), and a single membrane (44), which covers the degassing opening (38) of the base body (32), wherein at least one segmentation line (46) penetrates through the membrane (44), and wherein at least one support rib (40) is provided for abutment of adjacent segments (48a-48d) of the membrane (44) along the segmentation line (46).

## Description

### Technical field

The present invention refers to a degasssing unit for an electronics case, in particular for a battery case, comprising a base body, which is attachable to the case so as to seal against a perimeter of an aperture in the case, the base body comprising a degassing opening, and a membrane, which covers the degassing opening of the base body.

### Background

Such a degassing unit is known for instance from WO 2013/116419 A2.

Emergency venting of electrical equipment such as batteries is an important function to prevent the case from bursting in the event of a pressure buildup inside. Particularly with high-voltage storage devices such as used as traction batteries in electric vehicles, battery cell failure can occur, leading to a sharp rise in pressure and temperature inside the case. To prevent the case from bursting, the hot and highly pressurized gas must be quickly released from the interior of the case to the environment.

CN 113764814 A discloses a degassing unit having four separate membrane parts and a base body with a degassing opening separated into for opening sectors by crossing webs. Each membrane part covers one of the opening sectors.

From EP 2 328 207 A1 a degassing unit having a safety valve part is known. The safety valve part comprises a breakable portion.

The degassing unit, which is described in above-mentioned WO 2013/116419 A2, includes a vent that may be used to relieve effluent gases within a housing, thereby decreasing the internal pressure of a battery. The vent may be integrally formed in a top cover. For example, grooves and/or other features of the vent may be molded, stamped, scribed or otherwise formed into the top cover. These grooves or other features are designed to provide an area of the top cover for the vent that is weaker than the remainder of the top cover, so that the vent will open once the build up of gases within the housing reaches a certain point.

Furthermore, it is generally known to use semipermeable PTFE membranes for pressure compensation, see e.g. DE 10 2011 080 325 A1. An emergency degassing function is achieved by bursting of the membrane and release of the gas overpressure to the environment.

Functional limits for opening pressure are connected with material properties of PTFE membranes. Often the opening pressure is in the range of 150-300 mbar. After bursting, the membrane cannot be closed again.

It is an object of the invention to provide an economic reclosable degassing unit, which exhibits a particularly low opening pressure.

This is achieved by a degassing unit according to claim 1 and an electronics case according to claim 13. Advantageous embodiments are given in the subclaims and the description.

### Disclosure of the invention

In accordance with the invention, a degassing unit for an electronics case, in particular for a battery case, is provided. The degassing unit allows for rapid release of an internal overpressure inside the case.

The degassing unit comprises a base body, which is attachable to the case so as to seal against a perimeter of an aperture in the case. A seal, in particular a rubber seal, for instance an O-ring, may be provided at the base body for sealing against the case. The base body may comprise snap hooks for engaging behind a wall of the case at the aperture.

The base body comprises a degassing opening. In case of an internal overpressure in the case, gas from inside the case may escape through the degassing opening. The degassing opening may be divided in several opening sections. A total open area of the degassing opening may be at least 200 mm², preferably at least 500 mm². The total open area of the degassing opening is typically at most 100 cm², in particular at most 50 cm².

Location or direction specifications such as inside or outside, internal or external refer to the degassing unit mounted at the case.

The degassing unit further comprises a single membrane, which covers the degassing opening of the base body. In other words, one integral membrane covers the entire degassing opening, and in particular all of its opening sections. The membrane is generally provided on the outside of the base body, as seen from the interior of the case. Generally, the membrane consists of an impermeable material.

At least one segmentation line penetrates through the membrane. The segmentation line divides the membrane into at least two segments. The segments of the membrane are connected to one another, in particular at an outside rim of the membrane. In other words, the segmentation line does not extend across the entire width/diameter of the membrane. The segments and the rim form one monolithic membrane.

In an unloaded state of the degassing membrane, i.e. if an outside pressure of the case equals its internal pressure, the segments of the membrane contact each other along the segmentation line, i.e. the segmentation line has vanishing width. Thereby, the degassing unit is closed. Basically, gas flow in either direction through the degassing opening is prevented by the closed membrane. It will be appreciated, that a minor leakage is admissible through the unloaded membrane.

If the internal pressure of the case exceeds the external pressure, the segments of the membrane move away from each other. Thus, the degassing unit opens. Gas from inside the case may escape to the environment. For opening the membrane, only a small overpressure is required. It suffices to overcome the elastic contact of the membrane segments.

The opening pressure may be at most 50 mbar. Preferably, the opening pressure is at most 30 mbar. Particularly preferably, the opening pressure is at most 20 mbar.

At least one support rib is provided for abutment of adjacent segments of the membrane along the segmentation line. Preferably, the support rib spans across the degassing opening. If the external pressure exceeds the internal pressure of the membrane, the membrane is pressed towards the support rib. If the external pressure is sufficiently high, the membrane will contact the support rib. This inward deformation of the membrane causes the segments of the membrane to be pressed against each other. This increases the sealing effect between adjacent segments. Abutment of the membrane against the support rib prevents the membrane from opening towards the inside of the case. Furthermore, the contact between the support rib and the membrane may contribute to seal the membrane along the segmentation line in case of an external overpressure.

The degassing unit according to the invention is made of few simple parts. Therefore, it can be manufactured in a cost efficient manner.

Further, for opening of the membrane, a slight lifting of the membrane segments off from each other along the segmentation line suffices. This allows for implementing a particularly low opening pressure. If the internal overpressure is relieved, the elasticity of the membrane causes it to close again.

In case of an external overpressure, the sealing along the segmentation lines becomes more effective. Thus, the entrance of gases, liquids, particles or the like from the outside into the case is prevented.

The segmentation line and the support rib may in particular extend in a radial direction. Radial being a direction perpendicular to a longitudinal axis of the degassing unit, wherein in particular a main flow direction under degassing operation extends parallel to the longitudinal axis.

Preferably, the membrane has a convex shape facing away from the base body. This contributes to enhance this self-enforcing sealing effect with external overpressure, since the segments move towards each other, when the membrane is deformed towards the inside. In particular the at least one support rib has convex shape as well that corresponds with the convexity of the membrane.

The membrane may be molded, in particular in the convex shape. For producing the segmentation line, a knife may be provided on a molding tool.

The segmentation line may be provided with undercuts or an inclined edge face. This can enhance sealing and opening performance of the membrane.

In an unloaded state of the membrane, a gap between the support rib and the membrane may be formed. The gap allows the membrane segments to be pressed against each other in case of an external overpressure. The gap may measure in particular at least 0.3 mm, preferably at least 0.5 mm. A gap of this size suffices to achieve the increase in sealing along the segmentation line. The gap may measure at most 1.2 mm, preferably at most 0.9 mm. An excessive deformation of the membrane, which might eventually cause leakage, is thereby prevented.

Preferably, the segmentation line ends in a V-shaped bifurcation. The bifurcation facilitates deformation of the membrane for opening the degassing unit. Furthermore, tearing of the membrane at the end of the segmentation line is less likely to occur with this design. In particular the V-shaped bifurcation is arranged at a radially outer end of the segmentation line.

The support rib may comprise branches, which run along the bifurcation of the segmentation line. This increases support for the membrane and ensures tightness upon external overpressure.

Preferably, two segmentation lines penetrate through the membrane. This allows opening a large cross section for rapid release of gas from inside the case. Two support ribs are provided for abutment of adjacent segments of the membrane along the two segmentation lines. This ensures tightness in case of an external overpressure. Preferably, the two segmentation lines run orthogonal to each other, as do the two support ribs.

The membrane may be glued or welded to the base body. This allows achieving a tight and strong connection of the membrane and the base body in a convenient manner.

Preferably, the degassing unit comprises a protective cover, which is attached to the base body. The protective cover protects the membrane from damage. Likewise, the protective cover prevents extreme external loads, as might occur for instance from high-pressure washers, to be exerted on the membrane. The protective cover and the base body may be connected via a snap-in connection. This facilitates mounting of the degassing unit.

The membrane may be clamped between the base body and the protective cover. In this way, assembly of the degassing unit is further accelerated and the amount of equipment required for assembly is reduced. Elastic compression of the membrane between the base body and the protective cover can ensure tightness.

A thickness of the membrane may be at least 1.5 mm, preferably at least 2 mm. The thickness of the membrane may be at most 3 mm, preferably at most 2.5 mm.

The membrane can be made of rubber, preferably silicone rubber.

A hardness of the membrane may be at least 40 Shore A. The hardness of the membrane may be at most 60 Shore A, preferably at most 50 Shore A.

A membrane with the above-mentioned properties is particularly robust and cheap. Further, these properties allow for convenient opening of the membrane at low pressure, while tightness upon external overpressure is promoted.

The present invention further relates to an electronics case, in particular a battery case, having a degassing unit according the invention, as described above, which is arranged at an aperture of the case. The advantages of the degassing unit are particularly beneficial during operation of the case. Typically, battery cells, such as lithium-ion-cells are arranged inside the case. Insofar, the invention also relates to a battery.

The case may have a second aperture covered by a gas permeable plug. The plug allows for slow gas exchange between the interior of the case and the environment. In particular, the plug allows gas to enter into the case. The plug may comprise a gas-permeable membrane, for instance made of PTFE. The degassing unit is provided for rapid venting towards the outside, in particular for emergency degassing.

Preferably, a cross section of the aperture covered by the degassing unit is larger than the cross section of the second aperture covered by the plug. Rapid emergency degassing is facilitated by this design. A small cross section of the second aperture suffices for breathing during regular use.

### Brief description of drawings

Other advantages and features of the invention will be appreciated from the following description of embodiments of the invention with reference to the figures of the drawing, which show significant details, and from the claims. The individual features, as described above or explained below, may each be implemented individually or implemented together in any useful combination in variants of the invention.
- Fig. 1: shows a battery with battery cells enclosed in a battery case according to the invention, the battery case having a degassing unit according to the invention and a breathable plug, in a schematic sketch;
- Fig. 2: shows a schematic sectional view of a degassing unit according to the invention arranged at an aperture of an electronics case according to the invention, the degassing unit comprising a segmented membrane and a support rib;
- Fig. 3: shows a schematic side view of the degassing unit from Fig. 2;
- Fig. 4: shows a schematic bottom view of the degassing unit from Fig. 2;
- Fig. 5: shows a schematic sectional perspective view of the degassing unit from Fig. 2;
- Fig. 6: shows a schematic perspective view of the membrane of the degassing unit from Fig. 2.

### Detailed description

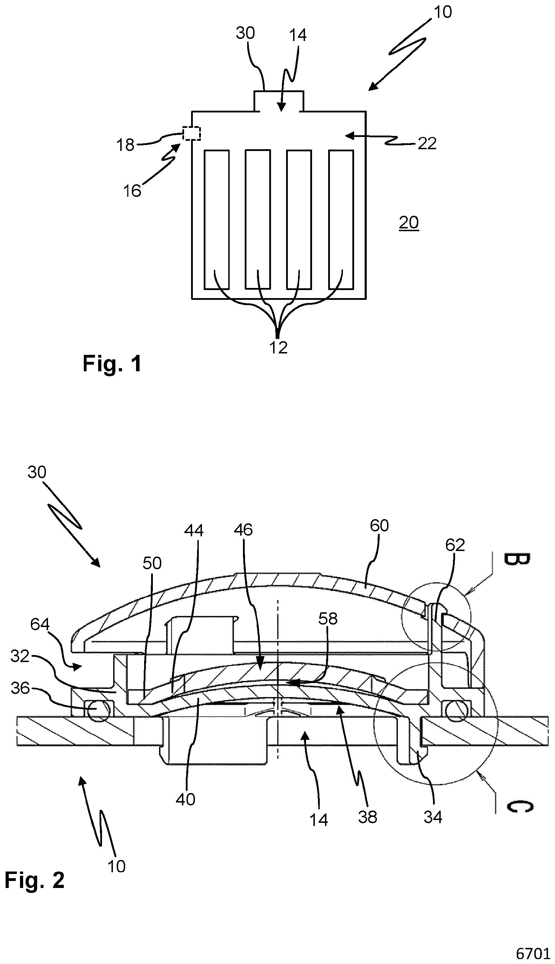

**Figure 1** shows an electonics case **10,** which is in this embodiment a battery case. Battery cells **12,** e.g. lithium-ion-cells, are arranged inside the case 10. The case has a (first) aperture **14.** In this embodiment, the case has also second aperture **16.** The cross section of the second aperture 16 is smaller than the cross section of the first aperture 14. A gas permeable plug **18** is arranged in the second aperture 16. The plug 18 allows for slow gas exchange between an outside environment **20** and the interior **22** of the case 10. In particular, the plug 18 allows gas to enter into the case 10.

A degassing unit **30** is arranged at the first aperture 14. The degassing unit 30 allows for a rapid emergency degassing, for instance if one of the battery cells 12 fails.

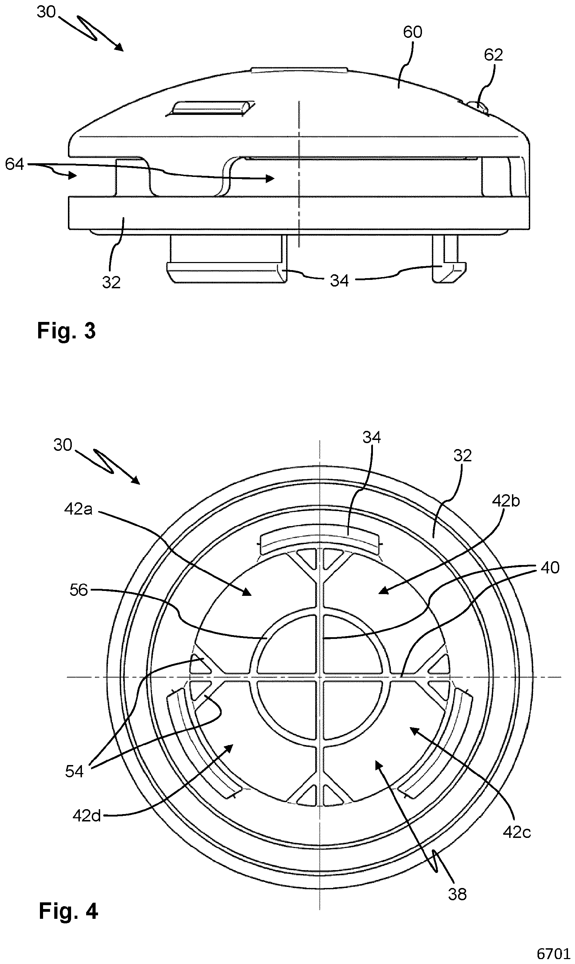

**Figure 2** shows a more detailed sectional view of degassing unit 30 arranged at aperture 14. Different views of the degassing unit 30 are shown in Figures **3, 4** and **5****.**

The degassing unit 30 comprises a base body **32.** The base body is attachable to the case 10. Snap hooks **34** may be provided for a snap-in connection of degassing unit 30 and case 10.

A seal **36** may be provided in order to seal the base body 32 against the case 10 around the aperture 14.

A degassing opening **38** is formed in the base body 32, see in particular Figure 4. Two mutually orthogonal support ribs **40** span across the degassing opening 38. The degassing opening can be considered to be divided into four opening sections **42a-42d.**

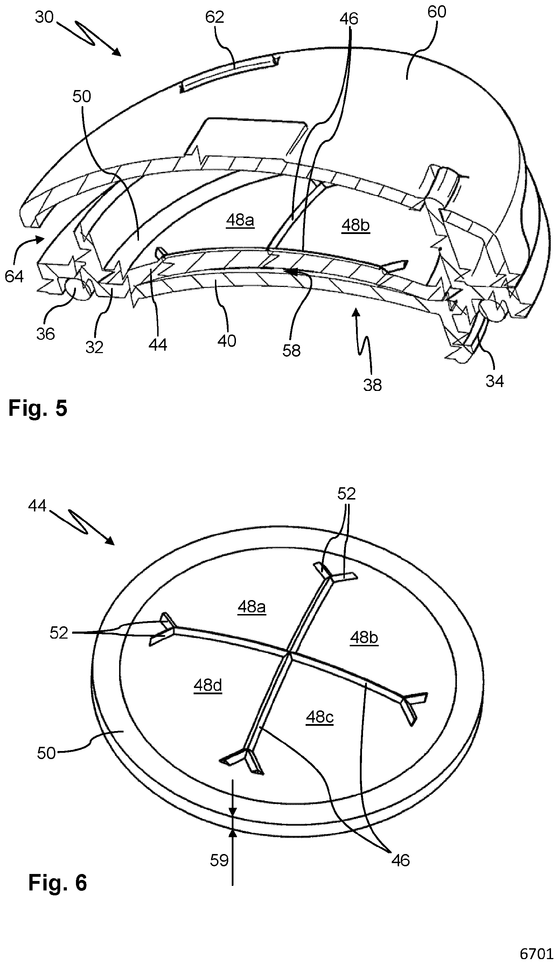

The degassing unit 30 further comprises a membrane **44,** see Figures 2 and 5. The membrane 44 is shown in isolation in **Figure 6****.** The membrane 44 covers the entire degassing opening 38. Two mutually orthogonal segmentation lines **46** are formed in the membrane 44. The segmentation lines 46 cut throught the membrane 44 in thickness direction. The segmentation lines 46 define severeal, here four, segments **48a-48d** of the membrane 44. The segments 48a-48d are interconnected by an annular rim **50** of the membrane 44. In radial direction, the segmentation lines 46 end well in advance of the outer perimeter of the membrane 44. The membrane 44 is one monolitic part comprising the rim **50** and all the segments 48.

The rim 50 may be glued or welded to the base body 32. A continuously thight connection direction can be established in this way around the degassing opening 38.

Each segment 48 of the membrane 44 is associated with one of the opening sections 42a-42d in the base body 32. The support ribs 40 extend below (i.e. towards the interior 22) and along the segmentation lines 46.

At each end of the segmentation lines 46 a V-shaped bifurcation **52** is formed, see Figure 5. Correspondingly, branches **54** are arranged at the ends of the support ribs 40, see Figure 4. The branches 54 are angled against the support ribs 40. The branches 54 extend below and along the bifurcations 52.

A ring **56** may be provided to stablise the support ribs 40 near the center of the degassing opening 38.

The membrane 44 and the support ribs 40 are convex shaped, see in particular Figures 2 and 5. The tip of the convex shape faces away from the interior 22 of case 10.

In an unloaded state, i.e. when the interior pressure of case 10 equals the exterior pressure, the segments 48a-48d of the membrane 44 abut against each other along the segmentation lines 46 including the bifurcations 52. Thereby, the membrane 44 is sealed.

If the pressure in the interior 22 of the case 10 exceeds the pressure in the environment 20, the membrane 44 is deformed. By deforming the membrane 44 towards the outside of case 10, the segments 48a-48d are lifted off from each other along the segmentation lines 46. Gas from the interior 22 may escape throught the degassing opening 38 and the gaps forming between the segments 48a-48d. In case of a sharp pressure increase or high volume flow, the segments 48a-48d may be bend to open a large cross section for rapid emergency degassing.

In the unloaded state, the membrane 44 rests at a distance from the support ribs 40 in the center of the degassing opening 38, see Figures 2 and 5. A gap **58** between the membrane 44 and the support ribs 38 may measure around 0.7 mm in axial direction of the degassing opening 38.

If the external pressure acting on the membrane 44 exceeds the interior pressure of the case 10, the membrane is deflected towards the support ribs 46. Finally, the support ribs 46 will hinder further deformation of the membrane 44. In this state, the segments 48a-48d abut against each other and the support ribs 46. In other words, two adjacent segments 48a-48d are in mutual contact and in contact with one of the support ribs 46 along their common segmentation line 46. Therby, thigth sealing of the degassing opening is achieved. Ingress of gas, fluid or particles from the environment 20 into the interior 22 is prevented.

The membrane 44 can be made of silicone rubber, having a hardness of e.g. 44 Shore A. A thickness **59** of the membrane 44 may be between 2 mm and 2.5 mm, see Figur 6. The membrane 44 may be of uniform thickness.

The degassing unit 30 further comprises a protective cover **60,** see Figures 2, 3 and 5. A snap connection between protective cover 60 and base body 32 may be established via further snap hooks **62.** The further snap hooks 62 may protude from the base body 32 and engage on the outside of the protective cover 60.

A surface of the protective cover 60 facing away from the case 10 may be basically closed in order to protect the membrane 44. Windows **64** may be formed around the perimeter of the protective cover 60 in order to allow for radial discharching of gas, which is escaping from the interior 22 of case 10.

In summery the invention relates to a degassing unit having a segmented membrane. To define the segments of the membrane segmentation lines penetrate through the thickness of the membrane, while leaving a continous rim that keeps the membrane to be one integral part. In an unloaded state, the segements abut each other so that the degassing unit is closed. For degassing of an case being equipped with the degassing unit, the membrane is deformed towards the outside so that the segments open along the segmentation lines. When an external overpressure is exerted on the membrane, the membrane ist deformed towards support ribs. The support ribs limit derformation of the membrane. Furthermore, the support ribs cover the segmentation lines. Adjacent segments of the membrane are pressed against the support rib which extends along the segmentation line between the respective segements. Furhtermore, adjacent segments are pressed against each other along the segmentation line between them.

### List of reference signs

Case **10**
Battery cells **12**
First aperture **14**
Second aperture **16**
Plug **18**
Environment **20**
Interior **22**
Degassing unit **30**
Base body **32**
Snap hooks **34**
Seal **36**
Degassing opening **38**
Support ribs **40**
Opening sections **42a-42d**
Membrane **44**
Segmentation lines **46**
Segments **48a-48d**
Rim **50**
Bifurcations **52**
Branches **54**
Ring **56**
Gap **58**
Thickness **59**
Protective cover **60**
Further snap hooks **62**
Windows **64**

## Claims

1. Degassing unit (30) for an electronics case (10), in particular for a battery case, comprising
- a base body (32), which is attachable to the case (10) so as to seal against a perimeter of an aperture (14) in the case, the base body (32) comprising a degassing opening (38),
- a single membrane (44), which covers the degassing opening (38) of the base body (32),
wherein at least one segmentation line (46) penetrates through the membrane (44),
and wherein at least one support rib (40) is provided for abutment of adjacent segments (48a-48d) of the membrane (44) along the segmentation line (46).

2. Degassing unit (30) according to claim 1, wherein the membrane (44) has a convex shape facing away from the base body (32), wherein preferably the at least one support rib (40) has convex shape as well.

3. Degassing unit (30) according to any one of the preceding claims, wherein, in an unloaded state of the membrane (44), a gap (58) between the support rib (40) and the membrane (44) is formed, the gap (58) measuring in particular at least 0.3 mm, preferably at least 0.5 mm, and/or at most 1.2 mm, preferably at most 0.9 mm.

4. Degassing unit (30) according to any one of the preceding claims, wherein the segmentation line (46) ends in a V-shaped bifurcation (52), wherein the V-shaped bifurcation (52) is in particular arranged at a radially outer end of the segmentation line (46).

5. Degassing unit (30) according claim 4, wherein the support rib (40) comprises branches (54) running along the bifurcation (52).

6. Degassing unit (30) according to any one the preceding claims, wherein two segmentation (46) lines penetrate through the membrane (44), and wherein two support ribs (40) are provided for abutment of adjacent segments (48a-48d) of the membrane (44) along the two segmentation lines (46).

7. Degassing unit (30) according to any one of the preceding claims, wherein the membrane (44) is glued or welded to the base body (32).

8. Degassing unit (30) according to any one of the preceding claims, further comprising a protective cover (60), which is attached to the base body (32).

9. Degassing unit (30) according to claim 8, wherein the membrane (44) is clamped between the base body (32) and the protective cover (60).

10. Degassing unit (30) according to any one of the preceding claims, wherein a thickness (59) of the membrane (44) is at least 1.5 mm, preferably at least 2 mm, and/or wherein the thickness of the membrane (44) is at most 3 mm, preferably at most 2.5 mm.

11. Degassing unit (30) according to any one of the preceding claims, wherein the membrane (44) is made of rubber, preferably silicone rubber.

12. Degassing unit (30) according to any one of the preceding claims, wherein a hardness of the membrane (44) is at least 40 Shore A, and/or wherein the hardness of the membrane (44) is at most 60 Shore A, preferably at most 50 Shore A.

13. Electronics case (10), in particular battery case, having a degassing unit (30) according to any one of the preceding claims arranged at an aperture (14) of the case (10).

14. Electronics case (10) according to claim 13, wherein the case (10) has a second aperture (16) covered by a gas permeable plug (18).

15. Electronics case (10) according to claim 14, wherein a cross section of the aperture (14) covered by the degassing unit (30) is larger than the cross section of the second aperture (16) covered by the plug (18).
